(19) **Europäisches Patentamt European Patent Office Office européen des brevets**

(11) **EP 3 917 337 B1**

(12) **EUROPEAN PATENT SPECIFICATION**

(45) Date of publication and mention of the grant of the patent:
**22.01.2025 Bulletin 2025/04**

(21) Application number: **20701781.5**

(22) Date of filing: **30.01.2020**

(51) International Patent Classification (IPC):
**A23L 23/10** *(2016.01)* **A23P 10/40** *(2016.01)*

(52) Cooperative Patent Classification (CPC):
**A23L 23/10; A23P 10/40**

(86) International application number:
**PCT/EP2020/052212**

(87) International publication number:
**WO 2020/157159 (06.08.2020 Gazette 2020/32)**

(54) **BOUILLON TABLET**

BOUILLON-TABLETTE

CUBE DE BOUILLON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2019 EP 19154963**

(43) Date of publication of application:
**08.12.2021 Bulletin 2021/49**

(73) Proprietor: **Société des Produits Nestlé S.A.**
**1800 Vevey (CH)**

(72) Inventors:
• **SHI, Weifeng**
**Zhangjiagang City, Jiangsu (CN)**
• **SCHROEDER, Volker**
**88633 HEILIGENBERG (DE)**
• **JIMMY, Perdana**
**78224 Singen (DE)**
• **LARREA ANAYA, Erik,Kurt**
**Col. Centro Sur Santiago de Querétaro, 76093 (MX)**
• **TRAPPO, Gregory**
**78224 Singen (DE)**
• **HANGARTER, Peter**
**78337 Öhningen (DE)**
• **THOMAE-WORRINGER, Corinna**
**78239 Rielasingen-Worblingen (DE)**

(74) Representative: **Dinger, Hansjörg**
**Société des Produits Nestlé S.A.**
**Avenue Nestlé 55**
**1800 Vevey (CH)**

(56) References cited:
EP-B1- 1 370 160      WO-A1-2004/112513
WO-A1-2009/074442     WO-A1-2019/002088

EP 3 917 337 B1

Description

TECHNICAL FIELD

The invention relates to a bouillon tablet. In particularly the invention relates to a bouillon tablet comprising crystalline salt having a median particle diameter Dv50 in the range of 0.7 to 3.5 mm, and crystalline sugar having a median particle diameter Dv50 in the range of 0.5 to 3.5 mm and pieces of plant material having a median particle diameter Dv50 in the range of 0.7 to 9.0 mm.

BACKGROUND

A conventional way of manufacturing bouillon tablets comprises mixing powdered bouillon components and pressing the mix into tablet form. Two ways of binding do exist for such kind of bouillon tablet: A fat binding system or an amorphous ingredient binding system.

The reason to compact powders in a regular form presents several advantages for the commercialization (e.g. reduction of volume, optimization of packaging material usage, shelf life and convenience). A habit developed by users of bouillon tablets is the crumbling of the tablet or cube into the dish during preparation process either to ensure good distribution and or to accelerate its dissolution time in the cooking water. This crumbliness is one of the attributes that needs to be ensured during shelf life and therefore a post-hardening of the bouillon tablet or cube has to be avoided. A minimum hardness is necessary to allow a wrapping of the bouillon tablet. A maximum hardness ensures that a normal user can break the bouillon tablet within fingers without the use of additional tools or appliances.

One drawback of the pressed bouillon tablet is its look of being un-natural for many consumers. Only a limited amount of herbs and spices can be added in commercial available bouillon tablets and/or are not visible due to the small particle size. These bouillon tablets do not look fresh and therefore unhealthy for many consumers. One further drawback is often the disintegration time and the crumbliness of bouillon tablets. WO2004112513 describes a process to form granules of powders having different colors and pressing the granules to a marbled bouillon tablet. Despite the marbled color effect of the bouillon tablet it looks like a standard pressed bouillon tablet as the granule structure is destroyed by pressing and has the same technical drawback as mentioned above.

Hence, it was the object of the present invention to provide the art with a more natural looking bouillon tablet and with ingredients which are visible for the consumer, being crumble and/or disintegrate fast in an aqueous solution.

SUMMARY OF THE INVENTION

The object of the present invention is to improve the state of the art or at least provide an alternative for a bouillon tablet:

> i) the bouillon tablet looks more natural;
> ii) used ingredients are visible;
> iii) used ingredients especially salt, sugar, pieces of plant material are visible and can be recognized by the consumer;
> iv) higher amounts of pieces of plant material;
> v) the bouillon tablet has a faster disintegration time in an aqueous solution, especially when compared to standard bouillon tablets;
> vi) avoid using palm fat;
> vii) avoid the usage of hydrogenated or interesterified oils and fats;
> viii) low fat bouillon tablet;
> ix) a bouillon tablet with no fat;
> x) reach a shelf life over 12 month with the same sensory properties;
> xi) enables the user to break the bouillon tablet in crumbles;
> xii) the bouillon tablet has a hardness of at least 80N;
> xiii) reduced in sodium salt.

The object of the present invention is achieved by the subject matter of the independent claims. The dependent claims further develop the idea of the present invention.

Accordingly, the present invention provides in a first aspect a composition of a bouillon tablet comprising:

> i) 20-70 wt% crystalline salt by weight of the composition;
> ii) 10-70 wt% pieces of plant material by weight of the composition;
> iii) up to 7 wt% fat by weight of the composition;

iv) up to 15 wt% crystalline sugar by weight of the composition;

wherein the crystalline salt has a median particle diameter Dv50 in the range of 0.7 to 3.5 mm; wherein the crystalline sugar has a median particle diameter Dv50 in the range of 0.5 to 3.5 mm; and the pieces of plant material have a median particle diameter Dv50 in the range of 0.7 to 9.0 mm; obtainable by a process comprising the following steps:

a) Mixing all ingredients together;
b) Adjust water content of the mix to an amount between 4.0 to 13.0 wt% by weight of the composition and further mix, wherein the water content is based on the method ISO 1666:1996;
c) Forming a bouillon tablet;
d) Drying the bouillon tablet.

A second aspect of the invention relates to a food product prepared by making use of the bouillon tablet of the invention.

It has been surprisingly found by the inventors that a bouillon tablet comprising crystalline salt having a median particle diameter Dv50 in the range of 0.7 to 3.5 mm, and crystalline sugar having a median particle diameter Dv50 in the range of 0.5 to 3.5 mm and pieces of plant material having a median particle diameter Dv50 in the range of 0.7 to 9.0 mm have the necessary attributes:

- the bouillon tablet looks more natural;
- the used coarse salt and coarse sugar or pieces of plant material are visible;
- the used ingredients can be recognized by the consumer;
- higher amounts of pieces of plant material can be present;
- the bouillon tablet has a faster disintegration time in an aqueous solution, especially when compared to standard bouillon tablets;
- the usage of palm fat or hydrogenated fat can be avoided;
- the bouillon tablet reach a shelf life over 12 month with the same sensory properties;
- enables the user to break the bouillon tablet in crumbles;
- low fat bouillon tablet, preferably no fat is used;
- the bouillon tablet has a hardness of at least 80N;
- the bouillon tablet has a lower density compared to a commercial available bouillon tablet;

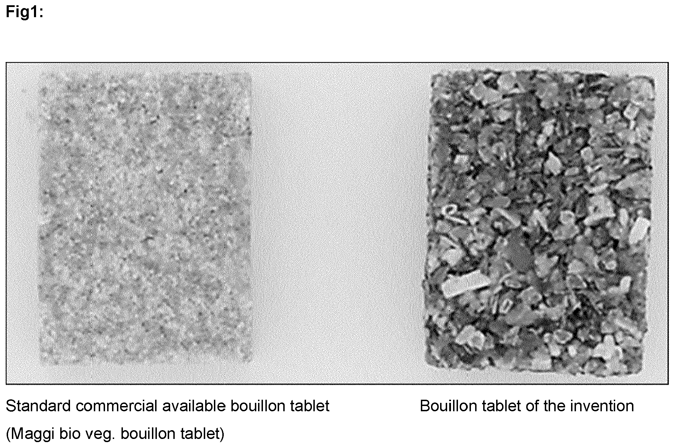

Fig. 1 shows a commercial available bouillon tablet and a bouillon tablet of the invention with the visible ingredients.

## DETAILED DESCRIPTION

The present invention pertains to a bouillon tablet composition of a bouillon tablet comprising:

i) 20-70 wt% crystalline salt by weight of the composition;
ii) 10-70 wt% pieces of plant material by weight of the composition;
iii) up to 7 wt% fat by weight of the composition;
iv) up to 15 wt% crystalline sugar by weight of the composition;

wherein the crystalline salt has a median particle diameter Dv50 in the range of 0.7 to 3.5 mm; wherein the crystalline sugar has a median particle diameter Dv50 in the range of 0.5 to 3.5 mm; and the pieces of plant material have a median particle diameter Dv50 in the range of 0.7 to 9.0 mm, obtainable by a process comprising the following steps:

a) Mixing all ingredients together;
b) Adjust water content of the mix to an amount between 4.0 to 13.0 wt% by weight of the composition and further mix, wherein the water content is based on the method ISO 1666:1996;
c) Forming a bouillon tablet;
d) Drying the bouillon tablet.

In a preferred embodiment the present invention pertains to a bouillon tablet composition of a bouillon tablet comprising:

i) 20-70 wt% crystalline salt by weight of the composition;

ii) 10-70 wt% pieces of plant material by weight of the composition;
iii) up to 10 wt% of an amorphous ingredient by weight of the composition;
iv) up to 7 wt% fat by weight of the composition;
v) up to 15 wt% crystalline sugar by weight of the composition;

wherein the crystalline salt has a median particle diameter Dv50 in the range of 0.7 to 3.5 mm; wherein the crystalline sugar has a median particle diameter Dv50 in the range of 0.5 to 3.5 mm; and the pieces of plant material have a median particle diameter Dv50 in the range of 0.7 to 9.0 mm, obtainable by a process comprising the following steps:

a) Mixing all ingredients together;
b) Adjust water content of the mix to an amount between 4.0 to 13.0 wt% by weight of the composition and further mix, wherein the water content is based on the method ISO 1666:1996;
c) Forming a bouillon tablet;
d) Drying the bouillon tablet.

The present invention pertains to a bouillon tablet composition of a bouillon tablet comprising:

i) 30-70 wt% crystalline salt by weight of the composition;
ii) 10-70 wt% pieces of plant material by weight of the composition;
iii) up to 7 wt% fat by weight of the composition;
iv) up to 15 wt% crystalline sugar by weight of the composition;

wherein the crystalline salt has a median particle diameter Dv50 in the range of 0.7 to 3.5 mm; wherein the crystalline sugar has a median particle diameter Dv50 in the range of 0.5 to 3.5 mm; and the pieces of plant material have a median particle diameter Dv50 in the range of 0.7 to 9.0 mm, obtainable by a process comprising the following steps:

a) Mixing all ingredients together;
b) Adjust water content of the mix to an amount between 4.0 to 13.0 wt% by weight of the composition and further mix, wherein the water content is based on the method ISO 1666:1996;
c) Forming a bouillon tablet;
d) Drying the bouillon tablet.

In a preferred embodiment the present invention pertains to a bouillon tablet composition of a bouillon tablet comprising:

i) 30-70 wt% crystalline salt by weight of the composition;
ii) 10-70 wt% pieces of plant material by weight of the composition;
iii) up to 10 wt% of an amorphous ingredient by weight of the composition;
iv) up to 7 wt% fat by weight of the composition;
v) up to 15 wt% crystalline sugar by weight of the composition;

wherein the crystalline salt has a median particle diameter Dv50 in the range of 0.7 to 3.5 mm; wherein the crystalline sugar has a median particle diameter Dv50 in the range of 0.5 to 3.5 mm; and the pieces of plant material have a median particle diameter Dv50 in the range of 0.7 to 9.0 mm, obtainable by a process comprising the following steps:

a) Mixing all ingredients together;
b) Adjust water content of the mix to an amount between 4.0 to 13.0 wt% by weight of the composition and further mix, wherein the water content is based on the method ISO 1666:1996;
c) Forming a bouillon tablet;
d) Drying the bouillon tablet.

"Bouillon tablet" means a tablet or cube or other geometric forms obtained by forming or moulding a loose ingredient mix into a tablet form, bar form, cube form or other geometric form", preferably a tablet form or bar form or cube form. The resulting tablet has a weight between 2 to 40g. Bar within this invention means a shape and/or form similar to a cereal bar.

"Crystalline salt" according to this invention means sodium chloride, but can also comprise other edible salts capable of imparting or enhancing a salty taste perception, such as potassium chloride. The bouillon tablet comprises 20 to 70% (by weight of the composition) crystalline salt, preferably 25 to 70%, preferably 25 to 65%, preferably 25 to 55%, preferably 25 to 50%, preferably 30 to 70%; preferably 30 to 65%, preferably 30 to 60%, preferably between 30 to 55%, preferably 35 to 70%, preferably 35 to 65%, preferably 35 to 60%, preferably between 35 to 55% (by weight of the composition). In a further embodiment, the crystalline salt has a median particle diameter Dv50 in the range of 0.7 to 3.5 mm, preferably a median particle diameter Dv50 in the range of 0.8 to 3.5 mm, preferably a median particle diameter Dv50 in the range of 0.9 to 3.5 mm, preferably a median particle diameter Dv50 in the range of 0.95 to 3.50 mm, preferably a median particle diameter Dv50 in the range of 1.00 to 3.5 mm, preferably a median particle diameter Dv50 in the range of 1.05 to 3.50 mm, preferably a median particle diameter Dv50 in the range of 1.10 to 3.50 mm, preferably a median particle diameter Dv50 in the range of 0.7 to 2.5 mm, preferably a median particle diameter Dv50 in the range of 0.7 to 1.5 mm, preferably a median particle diameter Dv50 in the range of 0.8 to 2.5 mm, preferably a median particle diameter Dv50 in the range of 0.8 to 1.5 mm, preferably a median particle diameter Dv50 in the range of 0.9 to 2.5 mm, preferably a median particle diameter Dv50 in the range of 0.9 to 1.5 mm, preferably a median particle diameter Dv50 in the range of 0.95 to 2.50 mm, preferably a median particle diameter Dv50 in the range of 1.00 to 2.5 mm, preferably a median particle diameter Dv50 in the range of 1.05 to 2.50 mm, preferably a median particle diameter Dv50 in the range of 1.10 to 2.50 mm, preferably a median particle diameter Dv50 in the range of 1.00 to 2.00 mm, preferably a median particle diameter Dv50 in the range of 1.00 to 1.75 mm, preferably a median particle diameter Dv50 in the range of 1.00 to 1.50 mm. Standard salt used for commercial available bouillon tablets has a median particle diameter Dv50 in the range of 0.15 to 0.55 mm, preferably 0.30 to 0.50 mm.
used for commercial available bouillon tablets has a median particle diameter Dv50 in the range of 0.15 to 0.55 mm, preferably 0.30 to 0.50 mm.

In a further embodiment, the composition comprises up to 15 wt% crystalline sugar (by weight of the composition), preferably up to 10 wt%, preferably up to 8 wt%, preferably between 0 to 15%, preferably between 0.5 to 15%, preferably between 0.5 to 10%, preferably between 0.5 to 8%, preferably between 2 to 8% (by weight of the composition). In a further embodiment, the crystalline sugar has a median particle diameter Dv50 in the range of 0.5 to 3.5 mm, preferably a median particle diameter Dv50 in the range of 0.6 to 3.5 mm, preferably a median particle diameter Dv50 in the range of 0.7 to 3.5 mm, preferably 0.8 to 3.5 mm, preferably a median particle diameter Dv50 in the range of 0.9 to 3.5 mm, preferably a median particle diameter Dv50 in the range of 0.95 to 3.50 mm, preferably a median particle diameter Dv50 in the range of 1.00 to 3.5 mm, preferably a median particle diameter Dv50 in the range of 1.05 to 3.50 mm, preferably a median particle diameter Dv50 in the range of 1.10 to 3.50 mm, preferably a median particle diameter Dv50 in the range of 0.5 to 2.5 mm, preferably a median particle diameter Dv50 in the range of 0.6 to 2.5 mm, preferably a median particle diameter Dv50 in the range of 0.7 to 2.5 mm, preferably a median particle diameter Dv50 in the range of 0.8 to 2.5 mm, preferably a median particle diameter Dv50 in the range of 0.9 to 2.5 mm, preferably a median particle diameter Dv50 in the range of 0.95 to 2.50 mm, preferably a median particle diameter Dv50 in the range of 1.00 to 2.5 mm, preferably a median particle diameter Dv50 in the range of 1.05 to 2.50 mm, preferably a median particle diameter Dv50 in the range of 1.10 to 2.50 mm, preferably a median particle diameter Dv50 in the range of 1.00 to 2.00 mm, preferably a median particle diameter Dv50 in the range of 1.00 to 1.75 mm, preferably a median particle diameter Dv50 in the range of 1.00 to 1.50 mm.

In a further embodiment, pieces of plant material is selected from the group consisting of pieces of parsley, celery, fenugreek, lovage, rosemary, marjoram, dill, tarragon, coriander, leek, ginger, lemongrass, curcuma, chili, ginger, paprika, mustard, garlic, onion, shallots, turmeric, tomato, oregano, thyme, basil, chilies, paprika, mushrooms, pimento, jalapeno pepper, white pepper, black pepper or combinations of these. In a preferred embodiment pieces of plant material are selected from the group of garlic, onion, tomato, pepper, parsley, leek, coriander, shallot or combination thereof. In a further embodiment, the bouillon tablet comprises pieces of plant material in an amount in the range of 10 to 70% (by weight of the composition), preferably between 15 to 65%, preferably between 20 to 60%, preferably between 25 to 60%, preferably between 25 to 55%, preferably between 25 to 50%, preferably between 30 to 60%, preferably between 30 to 55%, preferably between 30 to 50%, preferably between 35 to 60%, preferably between 35 to 55% (by weight of the composition). In a further embodiment the pieces of plant material have a median particle diameter Dv50 in the range of 0.7 to 9 mm, preferably a median particle diameter Dv50 in the range of 0.7 to 8 mm, preferably a median particle diameter Dv50 in the range of 0.7 to 7 mm, preferably a median particle diameter Dv50 in the range of 0.7 to 6 mm, preferably a median particle diameter Dv50 in the range of 0.7 to 5 mm, preferably a median particle diameter Dv50 in the range of 0.7 to 4 mm, preferably a median particle diameter Dv50 in the range of 0.7 to 3 mm, preferably a median particle diameter Dv50 in the range of 0.7 to 2 mm, preferably a median particle diameter Dv50 in the range of 0.8 to 8 mm, preferably a median particle diameter Dv50 in the range of 0.8 to 5 mm, preferably a median particle diameter Dv50 in the range of 0.8 to 4 mm, preferably a median particle diameter Dv50 in the range of 0.8 to 3 mm, preferably a median particle diameter Dv50 in the range of 0.8 to 2 mm, preferably a median particle diameter Dv50 in the range of 0.9 to 8.0 mm, preferably a median particle diameter Dv50 in the range of 0.9 to 6.0 mm, preferably a median particle diameter Dv50 in the range of 0.9 to 5.0 mm, preferably a median particle diameter Dv50 in the range of 0.9 to 4.0 mm, preferably a median particle diameter Dv50 in the range of 0.9 to 3 mm, preferably a median particle diameter Dv50 in the range of 0.9 to 2 mm, preferably a median particle diameter Dv50 in the range of 1.0 to 8.0 mm, preferably a median particle diameter Dv50 in the range of 1.0 to 6.0 mm, preferably a median particle diameter Dv50 in the range of 1.0 to 5.0 mm, preferably a median particle diameter Dv50 in the range of 1.0 to 4.0 mm, preferably a median particle diameter Dv50 in the range of 1.0 to 3.0 mm, preferably a median particle diameter Dv50 in the range of 1.0 to 2 mm.

In a further embodiment, pieces of animal material is selected from the group consisting of chicken, beef, pork, fish or combination thereof. In a further embodiment, the bouillon tablet comprises pieces of animal material in an amount in the range of 0 to 25% (by weight of the composition), preferably between 1 to 25%, preferably between 5 to 25%, preferably between 5 to 20% (by weight of the composition). In a further embodiment the pieces of animal material have a median particle diameter Dv50 in the range of 0.7 to 9 mm, preferably a median particle diameter Dv50 in the range of 0.7 to 8 mm, preferably a median particle diameter Dv50 in the range of 0.7 to 7 mm, preferably a median particle diameter Dv50 in the range of 0.7 to 6 mm, preferably a median particle diameter Dv50 in the range of 0.7 to 5 mm, preferably a median particle diameter Dv50 in the range of 0.7 to 4 mm, preferably a median particle diameter Dv50 in the range of 0.7 to 3 mm, preferably a median particle diameter Dv50 in the range of 0.8 to 8 mm, preferably a median particle diameter Dv50 in the range of 0.8 to 5 mm, preferably a median particle diameter Dv50 in the range of 0.8 to 4 mm, preferably a median particle diameter Dv50 in the range of 0.8 to 3 mm, preferably a median particle diameter Dv50 in the range of 0.9 to 8.0 mm, preferably a median particle diameter Dv50 in the range of 0.9 to 6.0 mm, preferably a median particle diameter Dv50 in the range of 0.9 to 5.0 mm, preferably a median particle diameter Dv50 in the range of 0.9 to 4.0 mm, preferably a median particle diameter Dv50 in the range of 0.9 to 3 mm, preferably a median particle diameter Dv50 in the range of 1.0 to 8.0 mm, preferably a median particle diameter Dv50 in the range of 1.0 to 6.0 mm, preferably a median particle diameter Dv50 in the range of 1.0 to 5.0 mm, preferably a median particle diameter Dv50 in the range of 1.0 to 4.0 mm, preferably a median particle diameter Dv50 in the range of 1.0 to 3.0 mm.

The median particle diameter Dv50 is used in the conventional sense as the median of the particle size distribution. Median values are defined as the value where half of the population resides above this point, and half resides below this point. The Dv50 is the size that splits the distribution with half above and half below this diameter. The particle size distribution Dv50 has been measured within this invention by selected sieves. In an embodiment the particle size Dv50 has been measured by selected sieves according to Retsch AS200. Alternative it may be measured by laser light scattering, microscopy or microscopy combined with image analysis. For example, the particle size distribution may be measured by laser light scattering. Since the primary result from laser diffraction is a volume distribution, the Dv50 cited is the volume median.

The term "amorphous ingredients" according to this invention means ingredients selected from the group consisting of yeast extract, vegetable powder, animal extract, bacterial extract, vegetable extract, animal powder, reaction flavour, hydrolyzed plant protein, or combinations of thereof. The bouillon tablet according to the invention comprise 0 to 10 % amorphous ingredients, preferably 0.5 to 10 %, preferably 0.5 to 9 %, preferably 0.5 to 5 %, preferably 1 to 10 %, preferably 2 to 10 %, preferably 2 to 9 %, preferably 2 to 5 %, preferably 3 to 9 %, preferably 3 to 8 % (by weight of the composition). In an embodiment, the amorphous ingredients are selected from the group comprising yeast extract, chicken extract, onion powder, garlic powder, celery root powder, tomato powder, bacterial extract, reaction flavour or combinations of thereof. A bacterial extract is described within WO2009040150 or WO2010105842. A vegetable extract is described within WO2013092296. Vegetable powder means at least one ingredient of onion powder, garlic powder, tomato powder, celery root powder or a combination thereof. Animal powder means at least one ingredient of meat powder, fish powder, crustacean powder or combination thereof. Meat powder means chicken powder or beef powder. Animal extract means at least one ingredient of meat extract, fish extract, crustacean extract or combination thereof. In a further embodiment, the bouillon tablet comprises yeast extract in an amount in the range of 0 to 10 % (by weight of the composition), preferably between 0.1 to 10 %, preferably between 0.1 to 5 %, preferably between 1 to 7 %, preferably between 2 to 6 % (by weight of the composition). In a further embodiment, the bouillon tablet comprises vegetable powder in an amount in the range of 0 to 10 % (by weight of the composition), preferably between 0.1 to 10 %, preferably between 0.1 to 7 %, preferably between 0.1 to 5 % (by weight of the composition). In a further embodiment, the bouillon tablet comprises animal extract in an amount in the range of 0 to 10 % (by weight of the composition), preferably between 0.1 to 10%, for further example between 0.1 to 5% (by weight of the composition). In a further embodiment, the bouillon tablet comprises bacterial extract in an amount in the range of 0 to 10 % (by weight of the composition), preferably between 0.1 to 10 %, preferably between 0.1 to 8 %, preferably between 0.1 to 5 %, preferably between 1 to 10 %, preferably between 2 to 8 % (by weight of the composition). In a further embodiment, the bouillon tablet comprises vegetable extract in an amount in the range of 0 to 10 % (by weight of the composition), preferably between 0.1 to 10 %, preferably between 0.1 to 5 % (by weight of the composition). In a further embodiment, the bouillon tablet comprises meat powder, fish powder or crustacean powder in an amount in the range of 0 to 10 % (by weight of the composition), preferably between 0.1 to 10 %, for further example between 0.1 to 5 % (by weight of the composition). In a further embodiment, the bouillon tablet comprises reaction flavour in an amount in the range of 0 to 10 % (by weight of the composition), preferably between 0.1 to 10 %, for further example between 0.1 to 5 % (by weight of the composition). Reaction flavours may preferably be amino acids and reducing sugars which react together on the application of heat via the Maillard reaction. In a further embodiment, the bouillon tablet comprises hydrolyzed plant protein in an amount in the range of 0 to 10 % (by weight of the composition), preferably between 0.1 to 10 %, preferably between 0.1 to 5 % (by weight of the composition). In a further embodiment, the bouillon tablet comprises chicken extract, beef extract, fish extract or crustacean extract in an amount in the range of 0 to 5 % (by weight of the composition), preferably between 0.5 to 5 % (by weight of the composition). In a further embodiment, the bouillon tablet comprises onion powder in an amount in the range of 0 to 10 % (by weight of the composition), preferably between 0.1 to 10 %, preferably between 0.1 to 5 % (by weight of the composition). In a further embodiment, the bouillon tablet comprises celery root powder in an amount in the range of 0 to 10 % (by weight of the composition), preferably between 0.1 to 10 %, preferably between 0.1 to 5 % (by weight of the composition). In a further embodiment, the bouillon tablet comprises tomato powder in an amount in the range of 0 to 10 % (by weight of the composition), preferably between 0.1 to 10 %, preferably between 0.1 to 5 % by weight of the composition).

In an embodiment, the composition of the bouillon tablet further comprises that at least 75 wt% of all ingredients (by weight of the composition) have a median particle diameter Dv50 above 0.6 mm, preferably at least 80 wt% of all ingredients have a median particle diameter Dv50 above 0.6 mm, preferably at least 85 wt% of all ingredients have a median particle diameter Dv50 above 0.6 mm, preferably at least 87 wt% of all ingredients have a median particle diameter Dv50 above 0.6 mm, preferably at least 90 wt% of all ingredients have a median particle diameter Dv50 above 0.6 mm, preferably at least 92 wt% of all ingredients have a median particle diameter Dv50 above 0.6 mm, preferably at least 94 wt% of all ingredients have a median particle diameter Dv50 above 0.6 mm, preferably between 75 to 100 wt% of all ingredients have a median particle diameter Dv50 above 0.6 mm, preferably between 80 to 100 wt% of all ingredients have a median particle diameter Dv50 above 0.6 mm, preferably between 85 to 100 wt% of all ingredients have a median particle diameter Dv50 above 0.6 mm, preferably between 80 to 100 wt% of all ingredients have a median particle diameter Dv50 between 0.6 to 9.0 mm, preferably between 75 to 100 wt% of all ingredients have a median particle diameter Dv50 between 0.6 to 4.0 mm, preferably between 85 to 100 wt% of all ingredients have a median particle diameter Dv50 between 0.6 to 4.0 mm, preferably between 90 to 100 wt% of all ingredients have a median particle diameter Dv50 above 0.6 mm, preferably between 90 to 100 wt% of all ingredients have a median particle diameter Dv50 between 0.6 to 4.0 mm, preferably at least 75 wt% of all ingredients have a median particle diameter Dv50 above 0.7 mm, preferably at least 80 wt% of all ingredients have a median particle diameter Dv50 above 0.7 mm, preferably at least 85 wt% of all ingredients have a median particle diameter Dv50 above 0.7 mm, preferably at least 87 wt% of all ingredients have a median particle diameter Dv50 above 0.7 mm, preferably at least 90 wt% of all ingredients have a median particle diameter Dv50 above 0.7 mm, preferably at least 92 wt% of all ingredients have a median particle diameter Dv50 above 0.7 mm, preferably at least 94 wt% of all ingredients have a median particle diameter Dv50 above 0.7 mm, preferably between 75 to 100 wt% of all ingredients have a median particle diameter Dv50 above 0.7 mm, preferably between 80 to 100 wt% of all ingredients have a median particle diameter Dv50 above 0.7 mm, preferably between 85 to 100 wt% of all ingredients have a median particle diameter Dv50 above 0.7 mm, preferably between 80 to 100 wt% of all ingredients have a median particle diameter Dv50 between 0.7 to 9.0 mm, preferably between 75 to 100 wt% of all ingredients have a median particle diameter Dv50 between 0.7 to 4.0 mm, preferably between 85 to 100 wt% of all ingredients have a median particle diameter Dv50 between 0.7 to 4.0 mm, preferably between 90 to 100 wt% of all ingredients have a median particle diameter Dv50 above 0.7 mm, preferably between 90 to 100 wt% of all ingredients have a median particle diameter Dv50 between 0.7 to 4.0 mm, preferably at least 80 wt% of all ingredients have a median particle diameter Dv50 above 0.8 mm, preferably at least 85 wt% of all ingredients have a median particle diameter Dv50 above 0.8 mm, preferably at least 87 wt% of all ingredients have a median particle diameter Dv50 above 0.8 mm, preferably at least 90 wt% of all ingredients have a median particle diameter Dv50 above 0.8 mm, preferably at least 92 wt% of all ingredients have a median particle diameter Dv50 above 0.8 mm, preferably at least 94 wt% of all ingredients have a median particle diameter Dv50 above 0.8 mm, preferably between 80 to 100 wt% of all ingredients have a median particle diameter Dv50 above 0.8 mm, preferably between 75 to 100 wt% of all ingredients have a median particle diameter Dv50 above 0.8 mm, preferably between 85 to 100 wt% of all ingredients have a median particle diameter Dv50 above 0.8 mm, preferably between 80 to 100 wt% of all ingredients have a median particle diameter Dv50 between 0.8 to 9.0 mm, preferably between 85 to 100 wt% of all ingredients have a median particle diameter Dv50 between 0.8 to 9.0 mm, preferably between 85 to 100 wt% of all ingredients have a median particle diameter Dv50 between 0.8 to 4.0 mm, preferably between 90 to 100 wt% of all ingredients have a median particle diameter Dv50 above 0.8 mm, preferably between 90 to 100 wt% of all ingredients have a median particle diameter Dv50 between 0.8 to 4.0 mm, preferably at least 80 wt% of all ingredients have a median particle diameter Dv50 above 0.9 mm, preferably at least 85 wt% of all ingredients have a median particle diameter Dv50 above 0.9 mm, preferably at least 87 wt% of all ingredients have a median particle diameter Dv50 above 0.9 mm, preferably at least 90 wt% of all ingredients have a median particle diameter Dv50 above 0.9 mm, preferably at least 92 wt% of all ingredients have a median particle diameter Dv50 above 0.9 mm, preferably at least 94 wt% of all ingredients have a median particle diameter Dv50 above 0.9 mm, preferably between 75 to 100 wt% of all ingredients have a median particle diameter Dv50 above 0.9 mm, preferably between 80 to 100 wt% of all ingredients have a median particle diameter Dv50 above 0.9 mm, preferably between 85 to 100 wt% of all ingredients have a median particle diameter Dv50 above 0.9 mm, preferably between 80 to 100 wt% of all ingredients have a median particle diameter Dv50 between 0.9 to 9.0 mm, preferably between 85 to 100 wt% of all ingredients have a median particle diameter Dv50 between 0.9 to 9.0 mm, preferably between 85 to 100 wt% of all ingredients have a median particle diameter Dv50 between 0.9 to 4.0 mm, preferably between 90 to 100 wt% of all ingredients have a median particle diameter Dv50 above 0.9 mm, preferably between 90 to 100 wt% of all ingredients have a median particle diameter Dv50 between 0.9 to 4.0 mm, preferably at least 85 wt% of all ingredients have a median particle diameter Dv50 above 1.0 mm, preferably at least 90 wt% of all ingredients have a median particle diameter Dv50 above 1.0 mm, preferably at least 92 wt% of all ingredients have a median particle diameter Dv50 above 1.0 mm, preferably at least 94 wt% of all ingredients have a median particle diameter Dv50 above 1.0 mm, preferably between 80 to 100 wt% of all ingredients have a median particle diameter Dv50 above 1.0 mm, preferably between 85 to 100 wt% of all ingredients have a median particle diameter Dv50 above 1.0 mm, preferably between 80 to 100 wt% of all ingredients have a median particle diameter Dv50 between 1.0 to 9.0 mm, preferably between 85 to 100 wt% of all ingredients have a median particle diameter Dv50 between 1.0 to 4.0 mm, preferably between 90 to 100 wt% of all ingredients have a median particle diameter Dv50 above 1.0 mm, preferably between 90 to 100 wt% of all ingredients (by weight of the composition) have a median particle diameter Dv50 between 1.0 to 4.0 mm.

In the context of the present invention, the term "fat" refers to triglycerides solid at a temperature of 25°C. The term "solid at a temperature of 25°C" means that the fat, stored at this temperature, maintains its shape. Fats and oils are the chief component of animal adipose tissue and many plant seeds. The fat according to this invention have a solid fat content greater than 2% at 30°C, preferably it have a solid fat content greater than 5% at a temperature of 30°C, preferably it have a solid fat content greater than 10% at a temperature of 30°C. The solid fat content of a fat for example be measured by pulsed NMR. Fat according to this invention means a vegetable and/or animal fat. In a further embodiment fat according to this invention means at least one ingredient of tropical fat, fractionated tropical fat, fractionated beef fat, beef fat, fractionated chicken fat, chicken fat, algae fat or shea butter, interesterified shea butter. In a further embodiment, the bouillon tablet comprises up to 7 wt% (by weight of the composition) fat, preferably up to 5 wt%, preferably up to 3 wt%, preferably in the range of 0 to 7 wt%, preferably between 0.5 to 7 wt%, preferably between 0.5 to 5 wt%, preferably between 0.5 to 3 wt% (by weight of the composition). Nowadays there is a nutritional trend to avoid or at least reduce consumption of fats rich in trans fatty acids and saturated fatty acids and to preferably consume healthy oils rich in polyunsaturated fatty acids. It is advantageous to provide a hard bouillon tablet which only or mainly contains oil that is liquid at ambient temperatures in local conditions and no or only little amounts of solid fat. In an embodiment, the bouillon tablet contains less than 5% saturated fat; preferably less than 3% saturated fat, more preferably the bouillon tablet contains no fat (0 wt% fat).

In an embodiment, the bouillon tablet further comprises oil, for example up to 10 wt% oil (by weight of the composition), preferably up to 7 wt% oil, preferably up to 5 wt% oil, preferably the composition comprises oil in an amount in the range of 0 to 10% (by weight of the composition), preferably between 0 to 5%, preferably between 0.5 to 10%, preferably between 0.5 to 7%, preferably between 0.5 to 5%, preferably between 0.5 to 3% (by weight of the composition). In a preferred embodiment, the oil is a vegetable oil. Preferably, the oil is selected from the group consisting of sunflower oil, rape seed oil, cotton seed oil, peanut oil, soya oil, olive oil, coconut oil, algal oil, safflower oil, corn oil, rice bran oil, sesame oil, hazelnut oil, avocado oil, almond oil, walnut oil or a combination thereof; more preferably sunflower oil. The term sunflower oil includes also high oleic sunflower oil. In the context of the present invention the term "oil" refers to triglycerides which are liquid or pourable at a room temperature of 20°C, for example liquid or pourable at a room temperature of 25°C. The oil have a solid fat content of less than 10 % at 20 °C, preferably less than 5 % at 20 °C, preferably less than 2 % at 20 °C, preferably 0 % at 20 °C. The oil may be rich in monounsaturated and polyunsaturated fatty acids. In an embodiment, the bouillon tablet contains less than 3 wt% oil; more preferably no oil (0 wt% oil).

In an embodiment the water content of the mix before forming a bouillon tablet is between 4.0 to 13.0 wt% (by weight of the composition), preferably between 4.5 to 11.5 wt%, preferably between 4.5 to 11.0 wt%, preferably between 5.0 to 10.0 wt%, preferably between 5.0 to 9.5 wt%, preferably between 5.0 to 8.5 wt%, preferably between 4.5 to 10.0 wt%, preferably between 4.5 to 9.5 wt%, preferably between 4.5 to 8.5 wt%, preferably between 5.0 to 8.0 wt%. The water content is most likely adjusted by adding water to the mixed composition before forming a bouillon tablet. The pressed tablet is dried and therefore the mentioned water content is before drying the tablet.

Forming means a process step to obtain a bouillon tablet comprising roller-compaction, moulding or extrusion, preferably roller-compaction or moulding. A standard bouillon process for hard bouillons can't be used. A pressing die is not used. For moulding or roller compaction a maximal force of 1.5 KN is applied, preferably below 1.5 KN, preferably below 1.25 KN, preferably below 1.0 KN.

The drying step can be carried out by any commonly known drying technique such as air drying, oven drying, vacuum drying, bed drying, microwave-vacuum drying, infrared radiation drying or combinations thereof. The drying step does not include spray drying. In an embodiment of the invention the drying is done at a temperature between 50 to 150°C, preferably between 50 to 120°C, preferably between 60 to 100°C, preferably between 65 to 90°C, preferably between 65 to 80°C. The drying time is between 5 min to 5 hours.

In an embodiment, the composition of the bouillon tablet has a density below 1.30 g/cm3, preferably below 1.25 g/cm3, preferably below 1.20 g/cm3, preferably below 1.15 g/cm3, preferably below 1.10 g/cm3, preferably below 1.05 g/cm3, preferably below 1.00 g/cm3; preferably between 0.70 to 1.30 g/cm3, preferably between 0.70 to 1.20 g/cm3, preferably between 0.75 to 1.10 g/cm3, preferably between 0.75 to 1.05 g/cm3, preferably between 0.75 to 1.00 g/cm3, preferably between 0.75 to 0.95 g/cm3.

In an embodiment the bouillon tablet is shelf-stable over 12 months and therefore has a water activity of below 0.5, preferably between 0.1 to 0.5.

In an embodiment, the bouillon tablet has a tablet hardness of at least 80 N, preferably at least 90N, preferably at least 100N, preferably at least 110N, preferably at least 120N, preferably between 80 to 500N, preferably between 80 to 400N, preferably between 80 to 300N, preferably between 80 to 250N, preferably between 90 to 500N, preferably between 90 to 400N, preferably between 90 to 300N, preferably between 90 to 250N, preferably between 100 to 500N, preferably between 100 to 400N, preferably between 100 to 300N, preferably between 100 to 250N.

## EXAMPLES

The invention is further described with reference to the following examples. It is to be appreciated that the examples do not in any way limit the invention.

### Example 1: Process

The general procedure for preparing a bouillon tablet of the invention is as follows:

- Mixing all ingredients together
- Add water and/or adjust the water content and further mix
- Forming a bouillon tablet
- Drying

All dry ingredients (crystalline salt, crystalline sugar, pieces of plant material and optionally amorphous ingredients) were weighted and then mixed manually. Afterwards liquid or pasty ingredients or water has been added to adjust the water content and further mix manually to obtain a homogenous mass. The resulting mixture was then immediately used to form manually a bouillon tablet by a cereal bar roller compaction kitchen device with a cutting roller having a height of 10mm.

*Measurement of bouillon tablet hardness*

Hardness measurement was carried out using Texture Analyser TA-HDplus (Stable Micro System, UK) equipped with 250 kg load cell and P/75 compression platen. Texture Analyser test mode was set to "Compression" with pre-test speed of 1 mm/s, test speed of 0.5 mm/s, post-test speed of 10 mm/s, target mode of "Distance", distance of 3 mm, halt time was set to "No", way back of 10 mm, trigger type to "Auto(Force)", and trigger force of 50 gram. Bouillon tablet was placed centrally in vertical-landscape orientation. Hardness measurement was carried out in 5 replication.

*Density measurement:*

Dimensions of bouillon tablet is measured from three dimensions, each dimension is measured three times and the average is taken for volume calculation. The product is weight. The density is calculated: density = weight (g) / volume (cm3). Five products are used and the average density is reported.

*Particle size distribution:*

The particle size distribution is measured by Retsch AS200, the selected sieves from the following range are used: 4000μm, 3150μm, 2500μm, 2000μm, 1600μm, 1000μm, 800μm and 710μm. Sieving time is 10 minutes and amplitude 1mm. Based on the results Dv50 are reported.

*Water content:*

Water content determination was based on the official method ISO 1666:1996 StarchDetermination of moisture content -- Oven-drying. The method is applied to different matrix with minor modifications. Approx. 100 g of sample was milled with Grindomix GM200 (Retsch GmbH, Germany) at 8000 RPM for 8 s. Nickel dish and its lid (xx) were weighed with XP204 balance (Mettler-Toledo GmbH, Switzerland) and the mass were reported with 0.1 mg accuracy. Subsequently, approx. 3 gram of test portion of sample were placed in the nickel dish. Weight of the dish with its lid and the sample was immediately determined. The dish, with its lid on the side, were placed in oven that has been set to $102 \pm 1$ °C for 240 minute (4 h). After drying in the oven, the dish was closed with its lid and immediately transferred to a desiccator for 60 minute. The dish, with its lid and the dried sample, was weighed immediately after removed from desiccator. Mass fraction of moisture ($M$) was reported in g/100 g of sample and determined as:

$$M = \frac{m_1 - m_0}{m_2 - m_0} \times 100$$

with $m_0$ is the mass of the dish and its lid, $m_1$ the mass of the dish with its lid and the sample before drying, and $m_2$ the mass of the dish with its lid and the sample after drying in oven.

**Examples 2 to 11:**

Examples 2 and 11 have been prepared according to example 1.

| Recipe | Comp. Ex. 2 | Ex. 3 | Ex. 4 | Ex. 5 | Ex. 6 |
|---|---|---|---|---|---|
| Salt [wt%] Dv50 = 1.15 mm | 43 | 43 | 43 | 43 | 43 |
| Sugar [wt%] Dv50 = 1.10 mm | 4.5 | 4.5 | 4.5 | 4.5 | 4.5 |
| Pieces of plant material (onion, garlic, tomato, pepper, parsley, leek, coriander) [wt%] Dv50 between 1.1 to 2.5 mm | 43.5 | 43.5 | 43.5 | 43.5 | 43.5 |
| Amorphous ingredient [wt%] | 9 | 9 | 9 | 9 | 9 |
| Water content [wt%] before forming and drying of the tablet | 3.8 | 5 | 6.8 | 8.4 | 10 |
| Average Hardness (N) after drying 3h at 70°C | 67 | 125 | 230 | 270 | 450 |
| Density [g/cm3] | 0.85 | 0.86 | 0.87 | 0.89 | 0.92 |
| Crumbliness | +++ | +++ | ++ | ++ | + |

| Recipe | Comp. Ex. 7 | Ex. 8 | Ex. 9 | Ex. 10 | Ex. 11 |
|---|---|---|---|---|---|
| Salt [wt%] Dv50 = 1.15 mm | 50 | 50 | 50 | 50 | 50 |
| Sugar [wt%] Dv50 = 1.10 mm | 5 | 5 | 5 | 5 | 5 |
| Pieces of plant material (onion, garlic, tomato, pepper, parsley, leek, coriander) [wt%] Dv50 between 1.1 to 2.5 mm | 45 | 45 | 45 | 45 | 45 |
| Amorphous ingredient [wt%] | - | - | - | - | - |
| Water content [wt%] before forming and drying of the tablet | 3.8 | 5 | 6.8 | 8.4 | 10 |
| Average Hardness (N) after drying 3h at 70°C | 44 | 105 | 195 | 240 | 385 |
| Density [g/cm3] | 0.83 | 0.84 | 0.86 | 0.87 | 0.91 |
| Crumbliness | +++ | +++ | +++ | ++ | + |

Examples 2 to 11 have been prepared according to example 1. As a comparison the density of different commercial available bouillon tablets have been measured (Maggi Chicken Bouillon Volaille, Maggi Doble Gusto Costilla and Maggi KUP OR) and showing a density between 1.38 to 1.61 g/cm3.

Examples 8 to 11 shows that no amorphous ingredient and no fat is needed to manufacture a bouillon tablet according to example 1. It seems to be essential that the mixture has a defined water content as claimed before forming the tablet and the bouillon tablet is dried. In case the water content is below 4 wt% no desired hardness can be achieved to wrap the bouillon tablet. In case the water content will be too high the tablet will be too hard and the consumer will not be able to crumble it.

**Example 12:** Disintegration time

The disintegration time of the bouillon tablet of the invention has been compared with a commercial available standard bouillon tablet (Maggi bio vegetable bouillon tablet). Water was heated to a temperature between 95°C to 100°C (boiling water). The bouillon tablet has been added to 500ml of the boiling water without stirring and the time measured until the bouillon tablet is disintegrated. The disintegration time for examples 3 to 6 and 8 to 11 are between 40 to 50 seconds, wherein the standard bouillon tablets needs 3:55 to 4:30 min to disintegrate completely.

**Example 13:** Natural Appearance

20 internal experienced panelists were used to rate the visible aspect of the bouillon tablet of the invention. All of them appreciated the natural look as the ingredients and especially the pieces of plant material (garnishes, herbs and spices are visible). In addition the bouillon tablet of the invention looks more fresh and healthier for them compared to the commercial available standard bouillon tablets. Fig. 1 shows a commercial bouillon tablet and a bouillon tablet of the invention with the visible ingredients.

**Example 14:**

Examples 14 has been prepared according to example 1. Within this example even coarser salt and sugar particle sizes have been used.

| Recipe | Ex. 14 |
|---|---|
| Salt [wt%] Dv50 = 1.75 mm | 43 |
| Sugar [wt%] Dv50 = 1.50 mm | 4.5 |
| Pieces of plant material (onion, garlic, tomato, pepper, parsley, leek, coriander) [wt%] Dv50 between 1.1 to 2.5 mm | 43.5 |
| Amorphous ingredient [wt%] | 9 |
| Water content [wt%] before forming and drying of the tablet | 6.0 |
| Crumbliness | +++ |

**Comparison examples 15-16:**

Comparison examples 15 and 16 have been prepared according to example 1.

| Recipe | Comp. Ex. 15 | Comp. Ex. 16 |
|---|---|---|
| Salt [wt%] Dv50 = 0.40 mm | 50 | 50 |
| Sugar [wt%] Dv50 = 0.35 | 5 | 5 |
| Pieces of plant material (onion, garlic, tomato, pepper, parsley, leek, coriander) [wt%] Dv50 between 0.30 to 0.45 mm | 45 | 45 |
| Amorphous ingredient [wt%] | - | - |
| Water content [wt%] before forming and drying of the tablet | 4 | 6 |
| Average Hardness (N) after drying 3h at 70°C | 512 | 1318 |
| Density [g/cm3] | 1.43 | 1.48 |
| Crumbliness | Too hard to crumble | Too hard to crumble |
| Disentegration time [min] | 3:50 | 4:50 |

Comparison examples 15 and 16 use only ingredients with a particle size between 0.30 to 0.45. It is shown that a bouillon tablet according to the process of example 1 result in a bouillon tablet having a higher hardness, lower density, longer disintegration time and these bouillon tablets are not possible to crumble. In addition the different ingredients are not visible anymore and the bouillon tablet looks not as natural as examples 3 to 6 and 8 to 11.

**Comparsion example 17:**

3 different granules have been prepared using standard preparation methods with the following composition.

| Granules | salt | sugar | MSG | Flavor/color | starch |
|----------|------|-------|-----|--------------|--------|
| Yellow | 51 | 9 | 31 | 9 | |
| Green | 35 | 8 | 40 | 7 | 10 |
| Brown | 34 | 10 | 5 | 18 | 33 |

The granules have a water content of 6wt% before pressing and the particle size is between 1.2 to 1.5mm long and having 0.8mm width. The different granules have been used to press a bouillon tablet according to WO2004112513. The resulted bouillon tablet is dried and has a marbled color with a smooth surface as the structure of the granules are destroyed after pressing. The density [g/cm3] of the bouillon tablet is 1.46 g/cm3 and therefore similar to a standard bouillon tablet as shown in comparison examples 15 and 16. The hardness of the bouillon tablet is 1005N and therefore again similar to a standard bouillon tablet as shown in comparison examples 15 and 16. The pressed bouillon tablet has been too hard to crumble it.

According to example 12 the disintegration time of the bouillon tablet resulting from the granules has been measured. The disintegration time is 3:45 min. This disintegration time is similar to standard bouillon tablets as shown in example 12.

According to example 13 the visible aspect of the bouillon tablet has been rated. All 20 internal experienced panelists appreciated the natural look of the bouillon tablet of the invention as the ingredients and especially the pieces of plant material (garnishes, herbs and spices) are visible. In addition the bouillon tablet of the invention looks more fresh and healthier for them compared to the bouillon tablet resulting from the granules. Despite the fact of a marbled visual effect the bouillon tablet resulting from granules is very similar to a standard bouillon tablet pressed from powder.

## Claims

1.  A bouillon tablet comprising:

    i) 20-70 wt% crystalline salt by weight of the composition;
    ii) 10-70 wt% pieces of plant material by weight of the composition;
    iii) up to 7 wt% fat by weight of the composition;
    iv) up to 15 wt% crystalline sugar by weight of the composition;

    wherein the crystalline salt has a median particle diameter Dv50 in the range of 0.7 to 3.5 mm; wherein the crystalline sugar has a median particle diameter Dv50 in the range of 0.5 to 3.5 mm; and the pieces of plant material have a median particle diameter Dv50 in the range of 0.7 to 9.0 mm, obtainable by a process comprising the following steps:

    a) Mixing all ingredients together;
    b) Adjust water content of the mix to an amount between 4.0 to 13.0 wt% by weight of the composition and further mix, wherein the water content is based on the method ISO 1666:1996;
    c) Forming a bouillon tablet;
    d) Drying the bouillon tablet.

2.  A bouillon tablet as claimed in claim 1, wherein the pieces of plant material is selected from the group consisting of parsley, celery, fenugreek, lovage, rosemary, marjoram, dill, tarragon, coriander, leek, ginger, lemongrass, curcuma, chili, paprika, mustard, garlic, onion, shallots, turmeric, tomato, coconut, oregano, thyme, basil, mushrooms, pimento, jalapeno pepper, white pepper, black pepper or combinations of thereof.

3.  A bouillon tablet as claimed in any one of claims 1 to 2, wherein the bouillon tablet further comprises up to 10 wt% of an amorphous ingredient by weight of the composition.

4.  A bouillon tablet as claimed in claim 3, wherein the amorphous ingredients is selected from the group consisting of yeast extract, vegetable powder, animal extract, bacterial extract, vegetable extract, animal powder, reaction flavour, hydrolyzed plant protein, or combinations of thereof.

5.  A bouillon tablet as claimed in any one of claims 1 to 4, wherein at least 75 wt% of all ingredients are visible having a median particle diameter Dv50 above 0.6 mm.

6.  A bouillon tablet as claimed in any one of claims 1 to 5, wherein the bouillon tablet has a density between 0.70 to 1.30 g/cm3, preferably between 0.75 to 1.05 g/cm3.

7.  A bouillon tablet as claimed in any one of claims 1 to 6, wherein the bouillon tablet further comprises up to 25 wt% of pieces of animal material by weight of the composition, preferably selected from the group consisting of chicken, beef, pork, fish or combinations of thereof, wherein the pieces of animal material have a median particle diameter Dv50 in the range of 0.7 to 9.0 mm.

8.  A bouillon tablet as claimed in any one of claims 1 to 7, wherein the bouillon tablet has a tablet hardness of at least 80N, wherein the hardness measurement was carried out using Texture Analyser TA-HDplus equipped with 250 kg load cell and P/75 compression platen.

9.  A bouillon tablet as claimed in any one of claims 1 to 8, wherein the water content is between 4.5 to 8.5 wt% by weight of the composition, wherein the water content is based on the method ISO 1666:1996.

10. A bouillon tablet as claimed in any one of claims 1 to 9, wherein the forming is done with roller-compaction, moulding or extrusion.

11. A bouillon tablet as claimed in any one of claims 1 to 10, wherein the drying is done at a temperature between 50 to 120°C.

12. A bouillon tablet as claimed in any one of claims 1 to 11, wherein the drying is done by oven drying, air drying, vacuum drying, bed drying, microwave-vacuum drying, infrared radiation drying or combinations thereof.

13. The use of a bouillon tablet as claimed in any one of claims 1 to 12 for preparing a food product.


**Patentansprüche**

1.  Bouillontablette, umfassend:

    i) zu 20-70 Gew.-% der Zusammensetzung ein kristallines Salz;
    ii) zu 10-70 Gew.-% der Zusammensetzung Stücke von Pflanzenmaterial;
    iii) bis zu 7 Gew.-% der Zusammensetzung Fett;
    vi) bis zu 15 Gew.-% der Zusammensetzung einen kristallinen Zucker;

    wobei das kristalline Salz einen mittleren Partikeldurchmesser Dv50 in dem Bereich von 0,7 bis 3,5 mm aufweist; wobei der kristalline Zucker einen mittleren Partikeldurchmesser Dv50 in dem Bereich von 0,5 bis 3,5 mm aufweist; und die Stücke von Pflanzenmaterial einen mittleren Partikeldurchmesser Dv50 in dem Bereich von 0,7 bis 9,0 mm aufweisen, erhältlich durch einen Prozess, umfassend die folgenden Schritte:

    a) miteinander Vermischen aller Zutaten;
    b) Anpassen des Wassergehalts der Mischung auf eine Menge zwischen 4,0 und 13,0 Gew.-% der Zusammensetzung und Weitermischen, wobei der Wassergehalt auf dem Verfahren ISO 1666:1996 basiert;
    c) Formgeben einer Bouillontablette;
    d) Trocknen der Bouillontablette.

2.  Bouillontablette nach Anspruch 1, wobei die Stücke von Pflanzenmaterial ausgewählt sind aus der Gruppe bestehend aus Petersilie, Sellerie, Bockshornklee, Liebstöckel, Rosmarin, Majoran, Dill, Estragon, Koriander, Lauch, Ingwer, Zitronengras, Kurkuma, Chili, Paprika, Senf, Knoblauch, Zwiebel, Schalotten, Gelbwurz, Tomate, Kokosnuss, Oregano, Thymian, Basilikum, Pilzen, Piment, Jalapeno-Chilischote, weißem Pfeffer, schwarzem Pfeffer oder Kombinationen davon.

3.  Bouillontablette nach einem der Ansprüche 1 bis 2, wobei die Bouillontablette ferner bis zu 10 Gew.-% der Zusammensetzung eine amorphe Zutat umfasst.

4.  Bouillontablette nach Anspruch 3, wobei die amorphen Zutaten aus der Gruppe ausgewählt sind, bestehend aus Hefeextrakt, Pflanzenpulver, Tierextrakt, Bakterienextrakt, Pflanzenextrakt, Tierpulver, Reaktionsaroma, hydrolysiertem Pflanzenprotein oder Kombinationen davon.

**5.** Bouillontablette nach einem der Ansprüche 1 bis 4, wobei mindestens zu 75 Gew.-% aller Zutaten sichtbar sind und einen mittleren Partikeldurchmesser Dv50 von über 0,6 mm aufweisen.

**6.** Bouillontablette nach einem der Ansprüche 1 bis 5, wobei die Bouillontablette eine Dichte zwischen 0,70 und 1,30 g/cm$^3$, vorzugsweise zwischen 0,75 und 1,05 g/cm$^3$ aufweist.

**7.** Bouillontablette nach einem der Ansprüche 1 bis 6, wobei die Bouillontablette ferner bis zu 25 Gew.-% der Zusammensetzung Stücke von Tiermaterial umfasst, vorzugsweise ausgewählt aus der Gruppe bestehend aus Huhn, Rind, Schwein, Fisch oder Kombinationen davon, wobei die Stücke von Tiermaterial einen mittleren Partikeldurchmesser Dv50 in dem Bereich von 0,7 bis 9,0 mm aufweisen.

**8.** Bouillontablette nach einem der Ansprüche 1 bis 7, wobei die Bouillontablette eine Tablettenhärte von mindestens 80 N aufweist, wobei die Härtemessung unter Verwendung eines Texturanalysators TA-HDplus ausgeführt wurde, der mit einer 250 kg-Wägezelle und einer P/75-Kompressionsplatte ausgestattet ist.

**9.** Bouillontablette nach einem der Ansprüche 1 bis 8, wobei der Wassergehalt zwischen 4,5 und 8,5 Gew.-% der Zusammensetzung beträgt, wobei der Wassergehalt auf dem Verfahren ISO 1666:1996 basiert.

**10.** Bouillontablette nach einem der Ansprüche 1 bis 9, wobei das Formgeben durch Walzenkompaktierung, Formen oder Extrusion erfolgt.

**11.** Bouillontablette nach einem der Ansprüche 1 bis 10, wobei das Trocknen bei einer Temperatur zwischen 50 bis 120 °C erfolgt.

**12.** Bouillontablette nach einem der Ansprüche 1 bis 11, wobei das Trocknen durch Ofentrocknung, Lufttrocknung, Trommeltrocknung, Vakuumtrocknung, Betttrocknung, Mikrowellenvakuumtrocknung, Infrarotstrahlungstrocknung oder Kombinationen davon erfolgt.

**13.** Verwendung einer Bouillontablette nach einem der Ansprüche 1 bis 12 zum Zubereiten eines Nahrungsprodukts.

**Revendications**

**1.** Cube de bouillon comprenant :

i) de 20 à 70 % en poids de sel cristallin par rapport au poids de la composition ;
ii) de 10 à 70 % en poids de matière végétale par rapport au poids de la composition ;
iii) jusqu'à 7 % en poids de matière grasse par rapport au poids de la composition ;
iv) jusqu'à 15 % en poids de sucre cristallin par rapport au poids de la composition ;

dans lequel le sel cristallin a un diamètre médian de particule Dv50 compris entre 0,7 et 3,5 mm ; dans lequel le sucre cristallin a un diamètre médian de particule Dv50 compris entre 0,5 et 3,5 mm ; et les morceaux de matière végétale ont un diamètre médian de particule Dv50 compris entre 0,7 et 9,0 mm, pouvant être obtenu par un procédé comprenant les étapes suivantes :

a) le mélange de tous les ingrédients ensemble ;
b) l'ajustement de la teneur en eau du mélange à une quantité comprise entre 4,0 et 13,0 % en poids par rapport au poids de la composition et du mélange supplémentaire, dans lequel la teneur en eau est basée sur le procédé ISO 1666:1996 ;
c) la formation d'un cube de bouillon ;
d) le séchage du cube de bouillon.

**2.** Cube de bouillon selon la revendication 1, dans lequel les morceaux de matière végétale sont choisis dans le groupe constitué de persil, céleri, fenugrec, livèche, romarin, marjolaine, aneth, estragon, coriandre, poireau, gingembre, citronnelle, curcuma, chili, paprika, moutarde, ail, oignon, échalote, curcuma, tomate, noix de coco, origan, thym, basilic, champignons, piment, piment jalapeno, poivre blanc, poivre noir ou une combinaison de ceux-ci.

**3.** Cube de bouillon selon l'une quelconque des revendications 1 à 2, dans lequel le cube de bouillon comprend en outre jusqu'à 10 % en poids d'un ingrédient amorphe par rapport au poids de la composition.

**4.** Cube de bouillon selon la revendication 3, dans lequel les ingrédients amorphes sont choisis dans le groupe constitué d'extrait de levure, poudre végétale, extrait animal, extrait bactérien, extrait végétal, poudre animale, arôme de réaction, protéine végétale hydrolysée, ou des combinaisons de ceux-ci.

**5.** Cube de bouillon selon l'une quelconque des revendications 1 à 4, dans lequel au moins 75 % en poids de tous les ingrédients sont visibles et ont un diamètre médian de particule Dv50 supérieur à 0,6 mm.

**6.** Cube de bouillon selon l'une quelconque des revendications 1 à 5, dans lequel le cube de bouillon a une densité comprise entre 0,70 et 1,30 g/cm3, de préférence entre 0,75 et 1,05 g/cm3.

**7.** Cube de bouillon selon l'une quelconque des revendications 1 à 6, dans lequel le cube de bouillon comprend en outre jusqu'à 25 % en poids de morceaux de matière animale par rapport au poids de la composition, de préférence choisis dans le groupe constitué de poulet, boeuf, porc, poisson ou des combinaisons de ceux-ci, dans lequel les morceaux de matière animale ont un diamètre médian de particule Dv50 compris entre 0,7 et 9,0 mm.

**8.** Cube de bouillon selon l'une quelconque des revendications 1 à 7, dans lequel le cube de bouillon a une dureté de cube d'au moins 80N, dans lequel la mesure de la dureté a été effectuée à l'aide de l'analyseur de texture TA-HDplus équipé d'un capteur de 250 kg et d'un plateau de compression P/75.

**9.** Cube de bouillon selon l'une quelconque des revendications 1 à 8, dans lequel la teneur en eau est comprise entre 4,5 et 8,5 % en poids par rapport au poids de la composition, dans lequel la teneur en eau est basée sur le procédé ISO 1666:1996.

**10.** Cube de bouillon selon l'une quelconque des revendications 1 à 9, dans lequel la mise en forme est réalisée par compactage au rouleau, moulage ou extrusion.

**11.** Cube de bouillon selon l'une quelconque des revendications 1 à 10, dans lequel le séchage est réalisé à une température comprise entre 50 et 120 °C.

**12.** Cube de bouillon selon l'une quelconque des revendications 1 à 11, dans lequel le séchage est réalisé par séchage au four, séchage à l'air, séchage par tambour, séchage sous vide, séchage en lit, séchage par micro-ondes sous vide, séchage par rayonnement infrarouge ou des combinaisons de ceux-ci.

**13.** Utilisation d'un cube de bouillon selon l'une quelconque des revendications 1 à 12 pour la préparation d'un produit alimentaire.

**Fig1:**

Standard commercial available bouillon tablet          Bouillon tablet of the invention
(Maggi bio veg. bouillon tablet)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004112513 A
- WO 2009040150 A
- WO 2010105842 A
- WO 2013092296 A